# EUROPEAN PATENT APPLICATION

(11) **EP 2 362 308 A1**
(43) Date of publication of application: **31.08.2011**
(21) Application number: 10290096.6
(22) Date of filing: 26.02.2010
(51) Int. Cl.: G06F 9/44

(54) **Devices and method for remote user interfacing**

(71) Applicant: Alcatel Lucent, 75008 Paris (FR)
(72) Inventor: Dobbelaere Philippe, 2520 Ranst (BE); Bosch, Peter, 1187 DA Amstelveen (NL)
(74) Representative: Moens, Marnix Karel Christiane

(57) **Abstract**

The present invention is related to a server device (10) for generating a user interface for a software application on a plug-in device (30). The server device is arranged for exchanging via the plug-in device first information related to selecting content in a communication device (50) in connection with the plug-in device. The server device is further arranged for monitoring the software application and for exchanging with the software application second information related to controlling the software application, whereby the server device is further arranged for providing translation between the first information related to selecting content in the communication device and the second information related to controlling the software application. The server device is arranged to send back status information over the plugin-device to the communication device in a properly encoded form.

## Description

### Field of the Invention

The present invention generally relates to the field of remote user interfaces.

### Background of the Invention

Dedicated control screens for a variety of applications exist today. Unfortunately they are very expensive and they need application specific code to be compiled for the device in question to work. The proposed solutions are often tied to the application they control, since they require application specific code compiled for that type of device to be deployed. The user experience in general is not good. Prior art solutions are typically intended for fixed wall mounting, although they can have a WiFi wireless interface. Examples can be found on the web sites http://www.embedded-web.com/products/sc-21x.html and http://www.tbe.it/terminale.htm.

Programmable remote devices (as found e.g. in Philips' Pronto™ product range) are expensive too and provide a difficult and limited customisation, typically only at the level of toolbar customisation (other buttons, other infrared control codes etc...). This means that they only work with a limited range of applications.

Some mobile phones and personal digital assistants (PDAs) have the same capability, but again they need application specific code compiled for that type of device and the user experience is not good. If it concerns a cellular phone, a paid subscription is required to establish a link with the controlled application.

Consequently, there is a need for a more flexible way of interfacing between a software application and a mobile control device. The solution should be application independent and cost-efficient.

### Aims of the invention

The present invention aims to provide a method and devices for establishing a user interface for a software application that overcome the above-mentioned drawbacks and limitations of the prior art solutions.

### Summary

The present invention relates to a server device for generating a user interface for a software application on a plug-in device provided on or in connection with a communication device. The server device is arranged for exchanging via the plug-in device first information related to selecting content in the communication device in connection with said plug-in device. The communication device is preferably a multimedia device. The server device is further arranged for monitoring the software application and for exchanging with the software application second information on a control action performed or to be performed on said software application. The server device is further arranged for providing translation between said first information related to selecting content in the communication device and said second information on a control action on said software application.

The above solution indeed achieves the aim of the invention. The server device is on the one hand capable of receiving via the plug-in device information related to the selection of content in the communication device and has on the other hand the intelligence to translate that first information into second information related to controlling the software application. In the other direction (towards the end user) the server can receive from the application information on a control action performed on the application, the information for example being status information, while the server is arranged for translating that information into further information that relates to selecting content in the communication device, as the latter device is capable of understanding information of such kind. The translated information is then brought to the communication device via the plug-in device.

The server device makes sure the first information from the plug-in device is converted into second information on a control action to be performed, so that the application receives the information on the control action in an understandable way. To be more precise, the translation operation comprises a semantic mapping of the first information related to selecting content in the communication device to second information for carrying out a control action for said selecting content in said software application.

In a preferred embodiment the first information related to selecting content in the communication device is ordered in a directory structure. This structure is mapped by the server device to control commands for the software application.

In another embodiment the server device is arranged for short range wireless communication with the plug-in device.

Preferably the server device comprises encoding means for securing the information related to selecting content. The encoding means is advantageously further arranged for encoding multimedia content data.

In another aspect the invention relates to a plug-in device operable as a user interface for a software application. The plug-in device is arranged for communicating with a communication device, preferably a multimedia device, provided with content selection means and for communicating with a server device in connection with the application. The plug-in device is arranged for receiving information related to selecting content in the communication device in a format adapted to the content selection means of the communication device, said information related to selecting content being translated software application control information, and for transmitting information related to a content selection operation performed at the communication device to the server device.

In one embodiment the plug-in device further comprises processing means, typically in the form of a small processor. This allows for example better management of encoding keys and local modification and caching of the data from the server.

Preferably the plug-in device comprises storage means for storing at least encoding/decoding information and/or configuration information.

In a preferred embodiment the plug-in device has a hardware interface for communicating with the communication device, whereby the interface is arranged for interpreting bus cycles of the communication device.

In one aspect the invention also relates to an assembly of a plug-in storage device operable as a user interface as previously described and a communication device into which said plug-in device can be inserted.

In yet another aspect the invention relates to a method for controlling a software application with a communication device. The method comprises the steps
- receiving in a server device as previously described via a plug-in device provided on or in connection with said communication device first information related to selecting content in said communication device,
- translating in said server device said first information related to selecting content into second information on a control action on said software application, and
- exchanging said second information on said control action with said software application.

In the above method information is exchanged between the multimedia (communication) device and the server device, which translates into commands going from the server to the application. This can possibly result in status info going back from the application to the server, which is then rendered to the communication device so that the user can observe (see, hear,...) it. In the server a transcoding operation is performed between the operation of selecting content in the communication device and sending a command to the application, or in the other direction, getting status from the application and rendering a multimedia stream towards the user.

In one embodiment the method further comprises the step of performing an update of the transport protocol information (e.g. network configuration, firewall parameters, ...) and/or security protocol information (e.g. cryptographic keys) between the plug-in device and the server device.

In an advantageous embodiment the communication between the plug-in device and the server device is performed via a gateway.

### Brief Description of the Drawings

Fig. 1 illustrates an embodiment of the solution according to the present invention.

Fig. 2 illustrates an embodiment of the plug-in device and server device according to the invention in a possible use scenario.

Fig. 3 illustrates an exemplary menu structure of a user interface.

### Detailed Description of the Invention

The basic idea behind the present invention is to use a plug-in device that can be inserted into an off-the-shelf multimedia rendering equipment as user interface. The plug-in device is capable of establishing a communication link, preferably wirelessly, to a server device in connection with the software application to be controlled.

By applying the present invention the content selection mechanism provided in the multimedia rendering equipment acts as a user interface for the application. The plug-in acts as user interface.

In practice, a content selection mechanism for sending control commands to a software application is often implemented as a (hierarchical) menu structure containing a set of commands and possibly submenus. This is for example the case for traditional Windows/X11 based applications. In the invention the user interface is created by the server by mapping via the plug-in device the user interface structure (hierarchy) of the multimedia communication device's content selection mechanism on the menu structure of the software application. The user interface structure for selecting content on the multimedia device is typically organised in a file structure. Selection of the appropriate "file" on the multimedia device is interpreted by the server device as a selection of the associated command for the application connected to the server device.

The plug-in device of the invention can operate as a user interface for a software application. The plug-in device comprises a hardware interface to a communication device provided with content selection and rendering means and a network interface to a server device monitoring the application, i.e. observing and controlling it. The server device translates the content selection process in user interface commands for controlling the application. Any information that need to be sent to the user (confirmation of command, observable data of the application, ...) is received via the network interface of the plug-in device. The information is transcoded at the server device into in a format adapted to the content type supported by the communication device in question. The plug-in device is further arranged for translating bus state information received from the communication device via said hardware interface into information that can be sent to the server device via the network interface of the plug-in device. This server device interprets the transmitted version of the bus state information, decodes it in terms of the content selection operation being performed at the communication device and performs a semantic mapping of this operation to one or more control actions on the application. By this process, a user of the communication device can launch control actions on the application by the sole operation of selecting content on the communication device.

The user interface is not generated locally on the multimedia device, but by a server in the network. As the user interface on the plug-in device is completely handled by the server device, the invention offers the advantage that the user interface for the application can be made remote to a cheap off-the-shelf piece of communication equipment, without the need to retarget the user interface to a particular HW/SW architecture for which application specific code must be created and deployed in the field. Further there is no need to manage the deployment of that code on all possible interface devices that can be considered. User interfaces become mobile and ubiquitously available. The user interface server decouples applications from specific user interface devices, optionally by using a de facto or explicit standard to describe the user interface capabilities. This can be done along the lines of Abstract Syntax Notation One (ASN.1) and Simple Network Management Protocol (SNMP), preferably making use of a semantically aware technology, e.g. Resource Description Framework (RDF). The server can be offered as an added value to customers by network/service operators. By providing a specification of the user interface, any application can use the server to provide human-machine interfacing. This also means that a single user interface device can manage all applications that require human-machine interfaces.

The off-the-shelf communication device can be a multimedia device like, for example, a photoframe, MP3 player or camera. Other devices can however also be envisaged. The multimedia device used has the capability to get its content from a plug-in device. The multimedia device must have a slot available for inserting the plug-in device. As this expansion slot can house a memory card of some sort, the multimedia is also said to have a 'storage interface', meaning that the hardware interface of the multimedia device for interaction with the plug-in device is used for storing a storage device like a memory card. The device comprises a content selection mechanism to which the content selection structure of the application (e.g. organised as a file structure) can be mapped. The plug-in device can for example be a compact flash (CF) card, or a microSD/miniSD/SD card (where 'SD' denotes secure digital) with associated memory. The invention establishes via the plug-in device a communication link between the multimedia device and the server, possibly by means of an intermediate gateway since very low-power short-range wireless technologies (Bluetooth, Zigbee, UWB) are targeted in the first place. This guarantees good battery autonomy and true mobility of the user interface device.

The wireless link can be secured by an appropriate encryption mechanism. The proposed solution then has some infrastructure required to deal with key management. The plug-in device comprises in one embodiment non-volatile memory for storing a key for encryption/decryption. The plug-in device is further arranged for putting the key there. A mechanism for securing the key is provided, since the key allows decrypting the information.

Whereas on a traditional Windows/X11 based application, the user interface is typically represented by a menu structure with commands and possibly submenus, in the present invention the user interface is created by the server by mapping the interface hierarchy on the file structure as seen by the user interface device. Selection of the appropriate "file" is interpreted as a selection of the associated command. At the same time, the server has the possibility to send additional output to the user by encoding that in a way that can be rendered by the communication device for which the connected plug-in device acts as user interface. On an MP3 player the server can encode the additional output as an audio PCM stream that is played on the device. On a photoframe the same additional data can be encoded in a JPEG image that is displayed on the frame. The additional data can contain current status relevant to the command, or just additional context that is relevant.

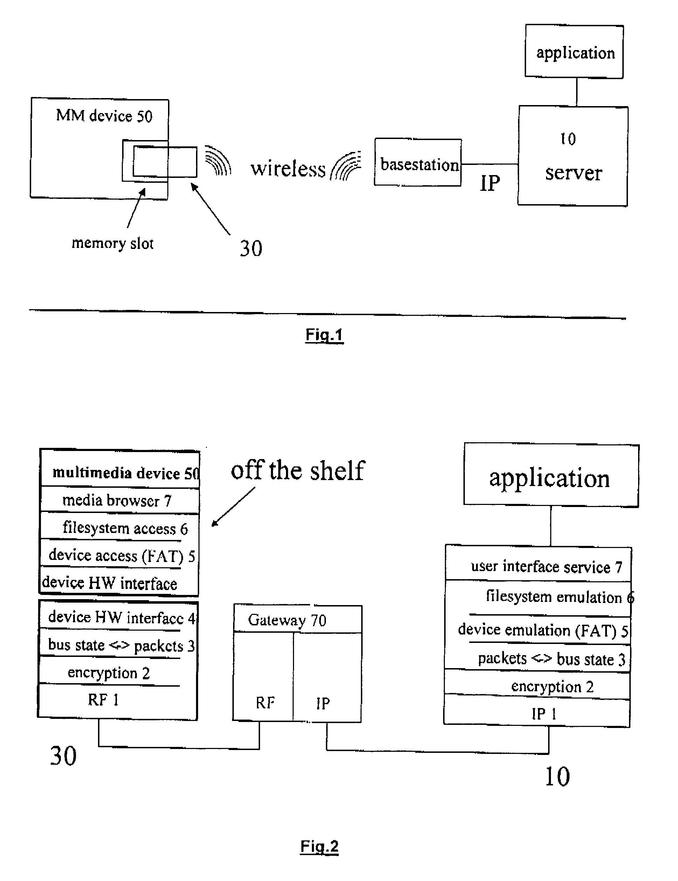

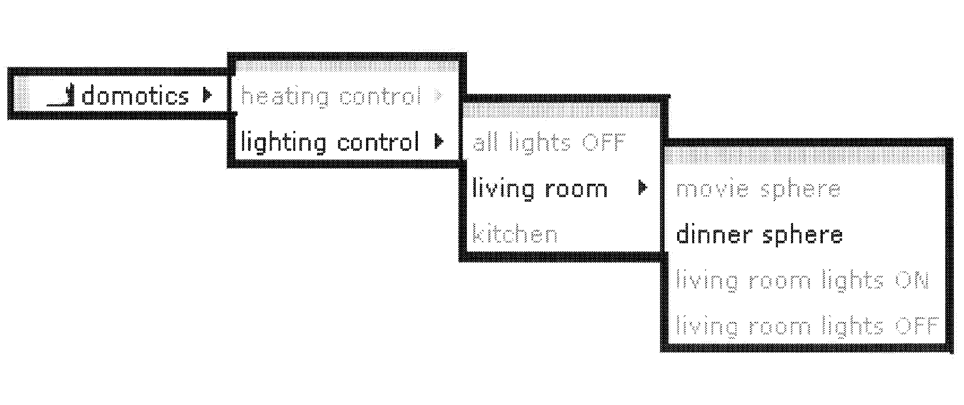

Implementation wise, the invention comprises two parts: a plug-in device (30 in Fig. 1) and a server device (10).

A possible implementation of the (optionally wireless) plug-in device (30) includes HW logic to interface with the storage interface (i.e. the hardware interface, as explained above) of the multimedia device and interpret the bus cycles on that interface, some functionality to transfer these bus operations in network packets (this can be HW or SW based), optional encryption logic and the wireless radio.

In order to satisfy storage devices that do not apply the concept of wait cycles (like SD cards), a local memory cache on the plug-in could be required (this depends on the bit rate/error rate available over the wireless link). In that case, some update protocol between the local cache and the server device needs to be foreseen. Local persistent memory can be provided on the plug-in device to hold configuration data (writeable from the storage interface when put in a computer, or through an over-the-air (OTA) provisioning mechanism).

A more expensive (in terms of price, energy and/or area) embodiment of a plug-in device includes a small embedded processor. This is advantageous, in that it allows much more intricate crypto key management and the ability to join the network through third party gateways (possibly using DHCP and code to negotiate with the gateway). Advantageously some permanent storage for configuration (preconfigured network access, crypto keys,...) is provided in the plug-in device.

A possible implementation of the server device includes logic to reconstruct the bus cycles on the storage interface of the communication device from the packets received over the wireless link. Logic to interpret these bus cycles as accesses in the file system known to the multimedia device, and logic to emulate this file system on the server side, populated with information from the user interface specification.

Fig.2 represents a possible implementation of the plug-in and the server device of the invention. The plug-in device shown is connected to an off-the-shelf multimedia device via a hardware interface (4). In the particular situation illustrated in this figure the plug-in device and the server device communicate via a gateway device (70). As usually in protocol stacks, corresponding numbers at left and right map to each other. Layers (1), (2) and (3) on the server side map on logic in the plug-in device, while layers (5), (6) and (7) map to logic in the communication device. Layers (1) to (3) ensure a potentially secure way of transporting information on the HW interface state between the communication device and the server device. Layers (5) to (7) translate the meaning of selecting multimedia content and rendering selected multimedia content in sending a control command to an application and returning status information about the application back to the user.

The user interface service is responsible for turning the user interface into a directory hierarchy equivalent, which will be shown on the multimedia device. To illustrate this, the following example is provided. A typical user interface may be described by a classical menu structure as depicted in Fig.3. In XML this can be represented as 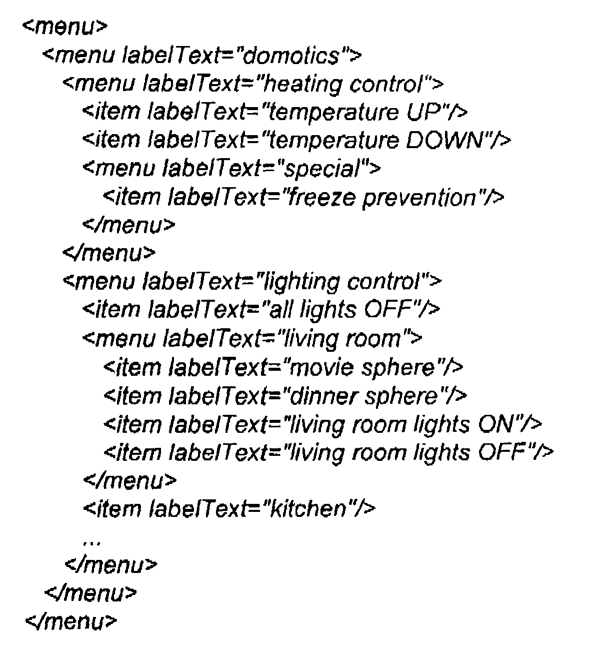 On the multimedia device this can be shown as the following directory structure (whereby d denotes a directory and f a file):

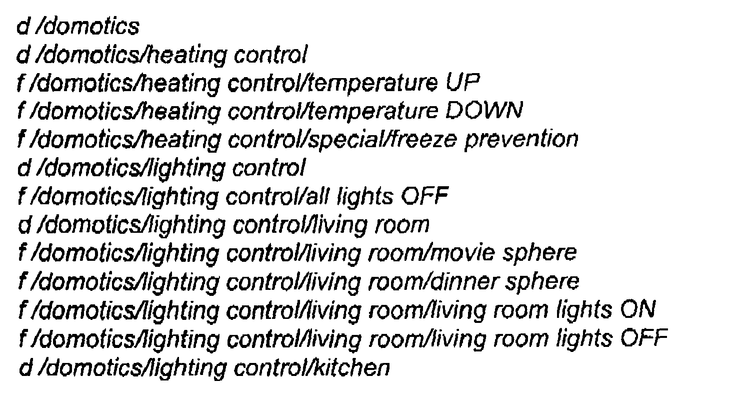

As an example of what is meant with "additional output", selecting one of the "heating control" entries could show (on a picture viewer) or play (on a movie viewer or an MP3 device) the current temperature and/or previous set point. The server would have standard functionality to render this additional output in a way which matches the capabilities of the multimedia device.
Suppose the user selects "temperature UP", then this is the sequence of events taking place:

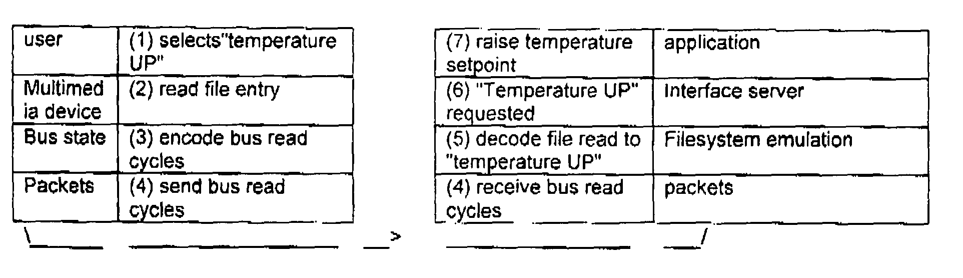

The communication from the SW application towards the multimedia communication device can, by means of example, be illustrated as follows. Note that this shows a scenario without local caching, whereby steps 9 to 12 actually repeat for every bus access.

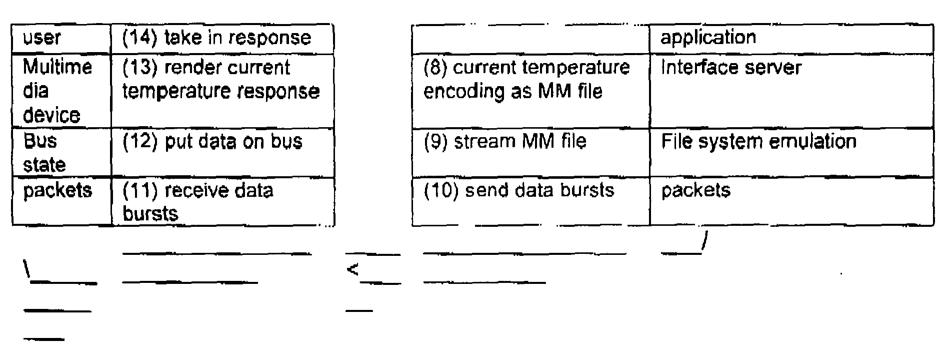

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Server device (10) for generating a user interface for a software application on a plug-in device (30), said server device arranged for exchanging via said plug-in device first information related to selecting content in a communication device (50) in connection with said plug-in device, said server device further being arranged for monitoring said software application and for exchanging with said software application second information related to controlling said software application, whereby said server device is further arranged for providing translation between said first information related to selecting content in the communication device and said second information related to controlling said software application.

2. Server device as in claim 1, wherein said translation comprises a mapping of said first information related to said selecting content in said communication device to said second information on a control action related to said selecting content in said software application.

3. Server device as in claim 1 or 2, wherein said first information related to said selecting content is ordered in a directory structure.

4. Server device as in any of claims 1 to 3, being arranged for short range wireless communication with said plug-in device.

5. Server device as in any of claims 1 to 4, further comprising encoding means for securing said first information related to selecting content.

6. Server device as in claim 5, wherein said encoding means is further arranged for encoding multimedia content data.

7. Plug-in device (30) operable as a user interface for a software application, said plug-in device arranged for communicating with a communication device provided with content selection means and for communicating with a server device in connection with said application, **characterised in that** said plug-in device is arranged for receiving information related to selecting content in said application in a format adapted to the content selection means of said communication device and for transmitting information related to a content selection operation performed at said communication device to said server device.

8. Plug-in device as in claim 7, further comprising processing means.

9. Plug-in device as in claim 7 or 8, comprising storage means for storing at least encoding/decoding information and/or configuration information.

10. Plug-in device as in any of claims 7 to 9, comprising a hardware interface for communicating with said communication device, said interface being arranged for interpreting bus cycles of said communication device.

11. Assembly of a plug-in storage device (30) operable as a user interface as in any of claims 7 to 10 and a communication device (50) into which said plug-in device can be inserted.

12. Method for controlling a software application with a communication device (50), comprising the steps of :
- receiving in a server device (10) as in any of claims 1 to 6 first information related to selecting content in said communication device,
- translating in said server device said first information related to selecting content into second information on a control action on said software application, and
- exchanging said second information on said control action with said software application.

13. Method for controlling a software application as in claim 12, further comprising the step of updating transport and/or security protocol information between said plug-in device and said server device.

14. Method for controlling a software application as in claim 12 or 13, wherein the communication between the plug-in device and the server device is performed via a gateway.
